# EUROPEAN PATENT APPLICATION

(11) **EP 1 347 604 A1**
(43) Date of publication of application: **24.09.2003**
(21) Application number: 02075812.4
(22) Date of filing: 28.02.2002
(51) Int. Cl.: H04L 12/58

(54) **Method and system for transmitting e-mails to a mobile communication device**

(71) Applicant: Koninklijke KPN N.V., 9726 AE Groningen (NL)
(72) Inventor: Van Steenbergen, Ate Sander, 9737 NN Groningen (NL); Rancuret, Arnoldus Johannes Paulus, 2518 EG Den Haag (NL); Sissing, Jan Johannes, 8925 AG Leeuwarden (NL); Van de Vlag, Hendrik Antonius Bernard, 2593 HJ Den Haag (NL); Snip, Jan Gerard, 2381 TC Zoeterwoude-dorp (NL); Bastiaansen, Marc-Jan, 2287 RM Rijswijk (NL)
(74) Representative: Wuyts, Koenraad Maria

(57) **Abstract**

Method of and system for transferring a message stored in a computer arrangement (12) to a switched-on mobile device (17(i)), with the following steps::
- transmitting an alert message from said computer arrangement (12) to said mobile device (17(i)) via a first mobile network (19);
- transmitting said message from said computer arrangement (12) to said mobile device (17(i)) upon request from said mobile device (17(i)) via a second mobile network (15).

## Description

### FIELD OF THE INVENTION

The invention relates to a method and a system for activating a local terminal connectable to a first network.

### BACKGROUND AND PROBLEM DEFINITION

It is known that a server of, for example, an "Internet Service Provider" (ISP) can announce to a user of a mobile device who is logging in or has already logged in that there is new e-mail, news, or other items for that user. Another possibility is that the user, after logging in to the server, asks if any new items have arrived. This can be done using, e.g., the "Wireless Application Protocol" (WAP).

All this is, however, normally only possible if there is an actual connection with the server. If a user wishes to be notified as soon as any new mail etc. arrives on the server, this is only possible if there is a continuous or very frequently established connection between the mobile device and the server. This means that the user must regularly establish a connection with the server in order to check whether any mail, messages, updates, etc. are present on the server. Since this will often not be the case, however, this procedure is both inefficient and costly both for the users and for the service provider. Of course, keeping a connection open continuously is even more expensive for residential and small business users. There is a desire in the market for an alerting system and method for alerting a user of a mobile device, e.g., a mobile telephone, a laptop, a Personal Digital Agent (PDA), an organizer, etc., using a wireless communication protocol, that an e-mail has arrived at an e-mail server. Here, e-mail is to be understood in a broad sense, i.e., as including any type of electronically transmittable mail, including e.g. facsimiles.

US-B 1-6,205,330 discloses a system and a method for alerting a mobile device that an e-mail has arrived at a mail server. The server is connected to a mobile network, such as the GSM (Global System for Mobile Communication) network and to a network, e.g. the Internet, arranged to transmit e-mail messages. The server stores e-mails addressed to the mobile device subscriber. Upon receiving an e-mail, the server establishes an SMS message including an agent having a reference to the e-mail and to the server. The server transmits this SMS message through an SMS gateway via the mobile network to the mobile device. In a main embodiment, the mobile device prompted by the received SMS message displays a message to the subscriber to connect the mobile device to a Personal Computer (PC), e.g., via a PCMCIA (Personal Computer Memory Card International Association) connection. After having established this connection, the SMS message is sent to the PC which runs a special program to process the SMS message. The program replies by establishing a request sent to the e-mail server via the mobile device. Upon receiving the request, the e-mail server sends the stored e-mail to the PC via both the SMS gateway and the mobile device using an SMS protocol. In an embodiment, the functionality of the PC may be included in a computer included in the mobile device. A disadvantage of this known technique is that the e-mail message is sent to the PC via the SMS gateway using the SMS protocol, preventing e-mail messages to be sent to the mobile device with a high rate.

PCT/EP01/09988 of the present applicant, not published prior to the priority date of the present application, discloses a method and system for activation of a local terminal. The local terminal is, for instance, a PC that is, normally, not connected to an e-mail server (or any other kind of remote server). An additional unit is provided, that may be a separate unit or a unit included in the terminal and that is always accessible for the server and arranged to communicate with the terminal. Upon receiving a message, e.g. an e-mail, addressed to the terminal the server establishes an alerting message including an activation code. The alerting message is sent to the additional unit via a predetermined network and, then, upon receipt thereof, the additional unit activates the terminal. The activated terminal establishes a connection with the server via another network for receiving the stored message. The terminal can be a mobile device and the message stored by the server can be an e-mail. However, this document does not refer to situations in which the mobile is connected to two mobile networks. Moreover, it does not refer to situations in which messages stored by the server cannot be transmitted to the terminal via the other network directly when the e-mail client of the terminal does not support a transmission protocol related to that server, e.g., POP3. Moreover, this document (PCT/EP01/09988) does not refer to situations, where one of the wireless networks supports transport of the stored message but does not support push functionality, and the other wireless network supports push functionality.

### SUMMARY

The present invention provides, in a first embodiment, an extension of the general idea of PCT/EP01/09988 to situations in which there are two mobile networks. In embodiments, the other problems referred to are solved.

To that end, the invention provides a method of transferring a message stored in a computer arrangement to a switched-on mobile device, comprising:
- transmitting an alert message from said computer arrangement to said mobile device via a first network;
- transmitting said message from said computer arrangement to said mobile device upon request from said mobile device via a second network;
both said first and second networks being mobile networks.
An intermediate step may be establishing an on-line connection between said computer arrangement and said mobile device;

The first network may be arranged to utilise a first protocol, the second network may be arranged to use a second protocol.

In an embodiment, the method may comprise sending said message from said computer arrangement to a protocol translator using a third protocol, translating said message in said third protocol to a message in said second protocol before transmission to said mobile device.

The method is especially applicable in case the computer arrangement is an e-mail server and the message is an e-mail message.

In an embodiment, the second protocol is HTTP.

Examples of the second wireless network are either GPRS or UMTS, whereas the first wireless network may be GMS.

The invention also relates to a communication system comprising a computer arrangement storing a message in a memory and arranged to transmit said message to a switched-on mobile device, said computer arrangement being arranged to:
- transmitting an alert message from said computer arrangement to said mobile device via a first network using a first protocol;
- waiting for an on-line connection to be established between said computer arrangement and said mobile device;
- transmitting said message from said computer arrangement to said mobile device upon request from said mobile device via a second network using a second protocol;
both said first and second networks being mobile networks.

The invention also relates to, a mobile device arranged to receive an alert message through a first mobile network, to automatically generate a HTTP get message, to transmit the HTTP get message to a computer arrangement storing a message for the mobile device and to receive the message from said computer arrangement as a HTTP reply message.

The invention will now be described in more detail with reference to a working example of a system architecture that is suitable for performing the method according to the invention.

### BRIEF DESCRIPTION OF THE DRAWINGS

Fig. 1 shows a schematic example of a system architecture according to PCT/EP01/09988.
Fig. 2 shows a schematic example of the system architecture according to an embodiment of the invention.
Fig. 3 shows a flow diagram explaining the operation of the invention;
Fig. 4 shows an embodiment of a computer arrangement that can be used in the invention.

### DESCRIPTION

For the purpose of teaching the invention, preferred embodiments of the method and devices of the invention are described in the sequel. It will be apparent to the person skilled in the art that other alternative and equivalent embodiments of the invention can be conceived and reduced to practice without departing from the true spirit of the invention, the scope of the invention being only limited by the claims as finally granted.

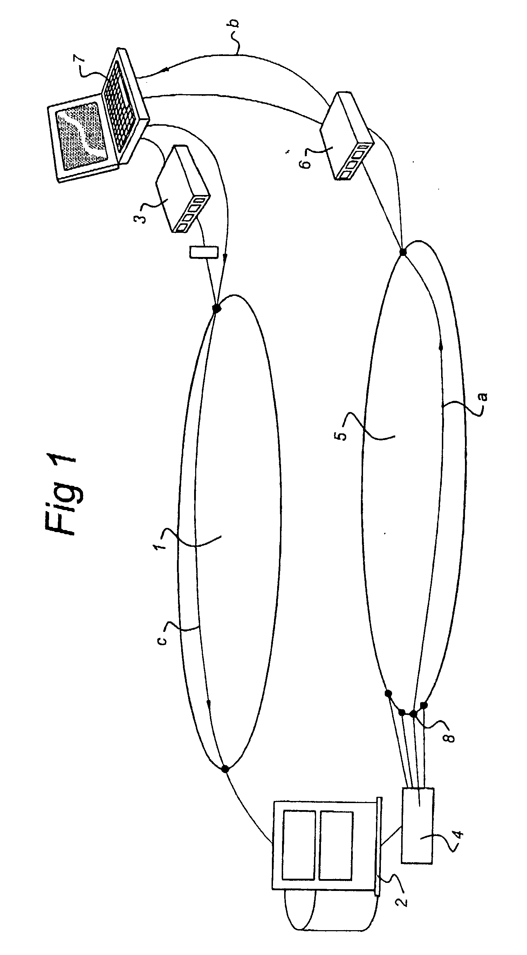

Now, the invention will be explained in detail, starting with a description of figure 1 that is also explained in PCT/EP01/09988 and not part of the present invention.

Figure 1 shows a system for activating a local "Non-permanently Accessible" terminal 7 connectable to a first network 1, e.g. the Internet. The terminal 7 is called "Non-permanently Accessible" since most terminals like PC's do not have a permanent on-line connection with networks like the Internet. A local "Permanently Accessible" activation module 6 is connected to a second network 5 (e.g. PSTN or ISDN) on the one hand and to the local terminal 7 on the other hand. This activation module 6 is called "Permanently Accessible" since it has an on-line connection with the second network 5. The activation module 6, after receiving an activation code (a) via second network 5, activates the terminal 7 via an activation signal (b). This activation can refer to a variety of things, for example control via the terminal 7 of (household) equipment, etc. In particular, however, the activation module 6 (subsequently) activates a connection between the local terminal 7 and a server 2 (c) via the first network 1, which server 2 further activates or controls or communicates with the terminal 7. The second network 5 passes on to the activation module 6 an identifier ("Calling Line Identifier" - CLI) of a node 8 via which the server 2 connects to the second network 5. The activation module 6 records this identifier (CLI) and activates the terminal 7 in accordance with the value of the CLI.

The server 2 comprises means, represented by selection means 4, for - via various network nodes, each with different identifiers (CLIs) - connecting to the second network 5, with the aim of activating the activation module 6 and indirectly the terminal 7 in various ways, in accordance with the value of the CLI recorded by the activation module 6.

The first network 1 and the second network 5 can in principle be completely separate networks. The first network 1 and the second network 5 can, however, also belong (in part) to the same physical network. In general, this latter possibility is usually the case: for residential use, the internet 1 is usually accessed via a PSTN or ISDN connection, via a PSTN or ISDN modem 3 and an ISP (not shown).

In an embodiment of figure 1, the terminal 7 could be a mobile device such as a mobile telephone.

The activation code (a) transmitted to the activation module 6 could comprise a further message, e.g., an SMS (Short Message Service) message that can be read by terminal 7 after being activated, whereas the first network 1 may be used to transmit e-mail messages stored in the server 2 to terminal 7 after the terminal is activated and has send a request to that effect to the server 2.

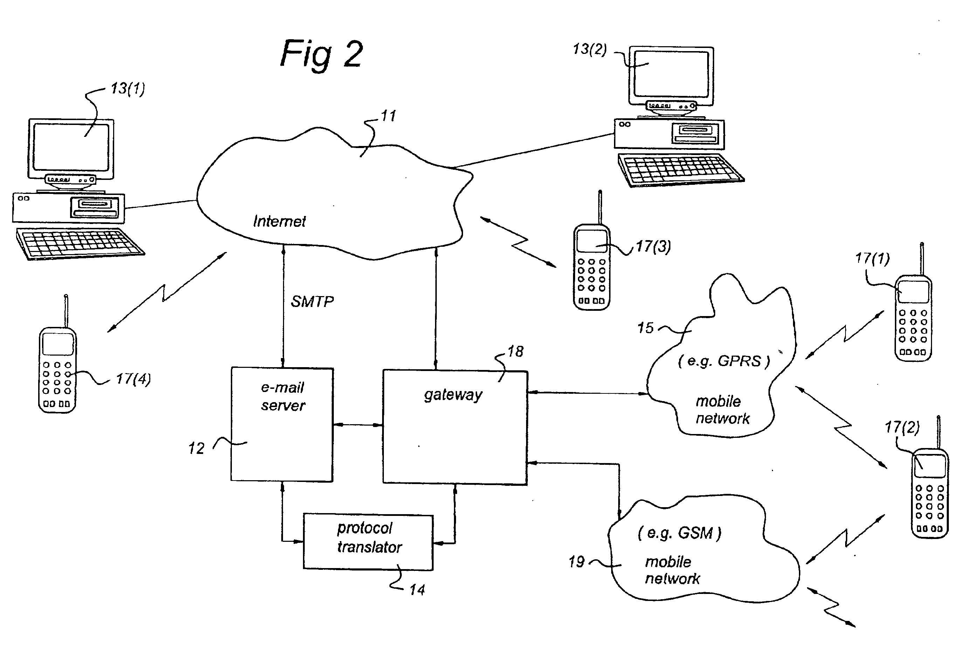

However, the mechanism as explained with reference to figure 1 cannot be used under all circumstances. E.g., when terminal 7 is a mobile device supporting an Internet protocol, like WAP or I-mode, and the system is arranged to support wireless communications between the server and the mobile device using GPRS, e-mail messages stored in server 2 cannot simply be pushed to the mobile device since GPRS does not, e.g., support I-mode. The invention solves this problem, as will be explained with reference to figure 2.

Figure 2 shows an embodiment of architecture for performing the present invention. Figure 2 shows an e-mail server 12. The e-mail server 12 is connected to the Internet 11. Through this connection, the e-mail server 12 is able to receive e-mails in an SMTP protocol through the Internet 11. The connection between the e-mail server 12 and the Internet 11 is drawn as a fixed connection. However, the connection may alternatively be wireless. The same applies to all other connections that are drawn as fixed connections in figure 2.

The Internet 11 is connected to other terminals 13(1), 13(2), .... These other terminals 13(1), 13(2), ... may be servers, personal computers, etc. able to send e-mails to the e-mail server 12 through the Internet 11.

Such e-mails may also be transmitted to the e-mail server 12 from mobile devices 17(3), 17(4). Such mobile devices will use a mobile network to transmit the e-mails through the Internet 11 to the e-mail server 12. For the sake of simplicity, such a mobile network is not drawn at the upper part of figure 2. The mobile devices 17(3), 17(4), are shown to be a mobile telephone. However, instead of being a mobile telephone, the mobile devices 17(3), 17(4) can be any other known (or yet to be developed) mobile device, such as a pager, a personal digital agent (PDA), a laptop with mobile communication facilities, etc.

The e-mail server 12 is connected to a gateway 18 which in turn is connected to 2 mobile networks 15 and 19 and to the Internet 11. One of the networks can be a data network like e.g. GPRS or UMTS,, while the other wireless network can be of another type, like e.g. circuit switched network like GSM. The mobile networks 15 and 19 comprise all kinds of telecommunication hardware and software for performing mobile telecommunication, as is known to a person skilled in the art. Since the present invention is not directed to this part of the architecture of figure 2, no further details will be given. However, the invention is in no way restricted to some specific kind of hardware software for building such mobile networks 15, 19.

Figure 2 also shows mobile devices 17(1), 17(2). Again, these mobile devices 17(1), 17(2) are shown be mobile telephones. However, they can be any other type of mobile devices as already explained above with reference to mobile devices 17(3), 17(4). Since there may be any number of mobile devices, below they will be indicated with "17(i), i = 1,2 ..., I".

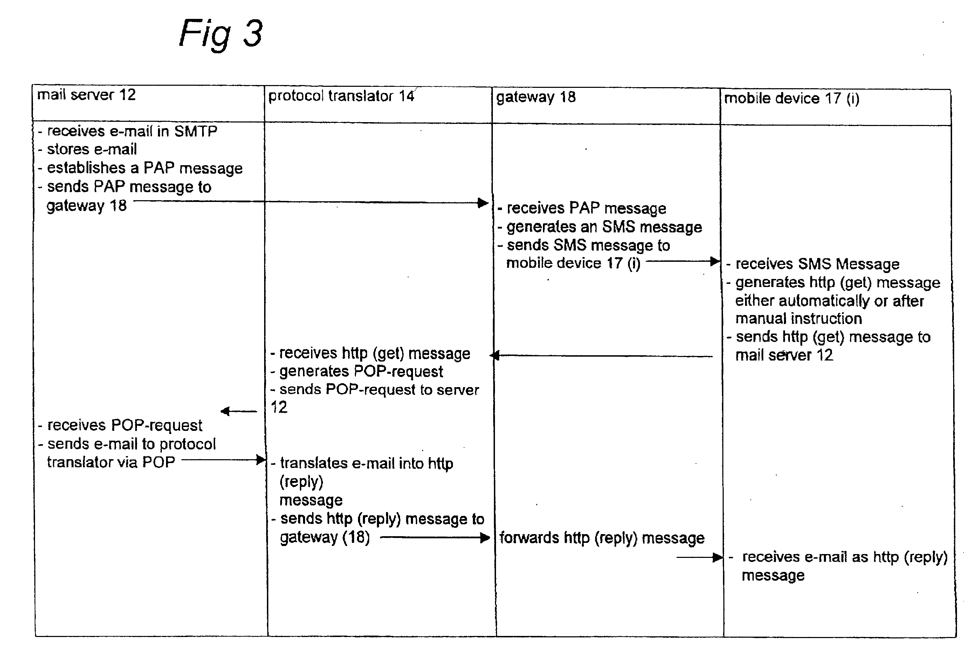

Figure 2 also shows a box termed "protocol translator" 14. The protocol translator 14 is connected to both the e-mail server 12 and the gateway 18. It's operation will be explained hereinafter with reference to figure 3.

Figure 3 shows a flowchart of the operation of the system shown in figure 2, in accordance with an example. The example relates to an e-mail being stored on the e-mail server 12. The e-mail server 12 is to transmit this e-mail to an addressed mobile device 17(i). However, during operation, it may well be that the mobile device 17(i) is switched on but does not have an on-line connection with the e-mail server 12. Moreover, in accordance with the invention, the wireless communication protocol used by mobile network 15, e.g., GPRS, does not support direct transmission (i.e., pushing) of the e-mail to the mobile device 17(i). Still, the e-mail must be sent to the mobile device 17(i). The operation of the system in accordance with the flowchart of figure 3 solves this problem.

The e-mail server 12 receives an e-mail via the SMTP protocol via network 11.

The e-mail server 13 stores this e-mail in it's memory.

Then, the e-mail server 12 generates a PAP (Password Authentication Protocol) message.The e-mail server 12 sends this PAP message to the gateway 18.

Upon receiving the PAP message, the gateway 18 generates an SMS message for the addressed mobile device 17(i). Then, the gateway 18 sends this SMS message to the addressed mobile device 17(i) via the mobile network 19, that may be of the type GSM.

Upon receiving the SMS message, the addressed mobile device 17(i) generates a HTTP get message. Such a HTTP get message is a message known as such by persons skilled in the art and is used to get, e.g., a web page. The mobile device 17(i) may be programmed to generate that HTTP get message, either automatically upon receiving the SMS message or may be programmed to display a message to the user of the mobile device 17(i) upon receiving the SMS message. Then, the user is able to manually instruct the mobile device 17(i) to generate the HTTP get message.

After the HTTP get message is generated, it is send to the gateway 18 via the mobile network 15. Then the gateway 18 sends this message to the protocol translator 14. Then the protocol translator 14 translates this HTTP get message into a POP request to the e-mail server 12. POP is the Post Office Protocol which is supported by the e-mail server 12.

In the example of figure 2, the gateway 18 communicates with the mobile devices 17(i) using the GPRS network 15. Nowadays the GPRS network is unable to push e-mails directly to mobile device 17(i).

Therefore, the e-mail server 12 after having received the POP request from the protocol translator 14 sends the stored e-mail to the protocol translator 14 via the POP protocol.

The protocol translator 14, after having received thee-mail via the POP protocol, translates the received e-mail into a HTTP reply message. Such a HTTP reply message is known to persons skilled in the art and is used to transmit web pages from a web server to a client. The HTTP reply message is transmitted to the gateway 18 that forwards the HTTP reply message to the mobile device 17(i).

Finally, the mobile device 17(i) receives the e-mail HTTP reply message and shows the content of the e-mail to the user of the mobile device 17(i).

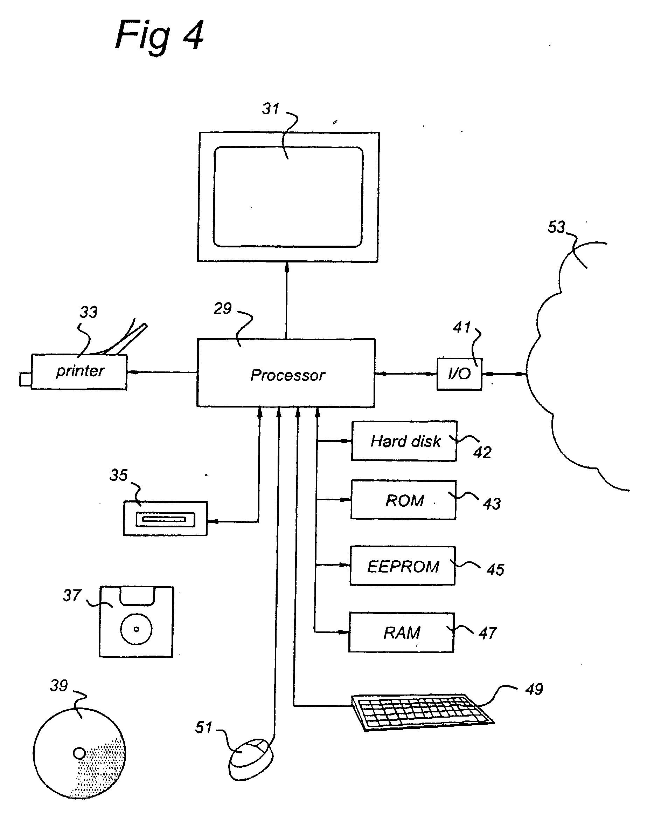

In figure 4, an overview is given of a computer arrangement that can be used to embody the email server 12. However, also the terminals 13(1), 13(2), the gateway 18 and the protocol translator 14 can be embodied in essentially the same way.

The arrangement comprises a processor 29 for carrying out arithmetic operations.

The processor 29 is connected to a plurality of memory components, including a hard disk 42, Read Only Memory (ROM) 43, Electrically Erasable Programmable Read Only Memory (EEPROM) 45, and Random Access Memory (RAM) 47. Not all of these memory types need necessarily be provided. Moreover, these memory components need not be located physically close to the processor 1 but may be located remote from the processor 29.

The processor 29 is also connected to means for inputting instructions, data etc. by a user, like a keyboard 49, and a mouse 51. Other input means, such as a touch screen, a track ball and/or a voice converter, known to persons skilled in the art may be provided too.

A reading unit 35 connected to the processor 29 is provided. The reading unit 35 is arranged to read data from and possibly write data on a data carrier like a floppy disk 37 or a CDROM 39. Other data carriers may be tapes, DVD, etc,. as is known to persons skilled in the art.

The processor 29 is also connected to a printer 33 for printing output data on paper, as well as to a display 31, for instance, a monitor or LCD (Liquid Crystal Display) screen, or any other type of display known to persons skilled in the art.

The processor 29 is connected to at least the Internet 11 (cf. figure 2) but may also be connected to a further communication network 53, for instance, the Public Switched Telephone Network (PSTN), a Local Area Network (LAN), a Wide Area Network (WAN), etc. by means of I/O means 41. The processor 1 is arranged to communicate with other communication arrangements through the network 53.

The processor 29 may be implemented as stand alone system, or as a plurality of parallel operating processors each arranged to carry out subtasks of a larger computer program, or as one or more main processors with several subprocessors. Parts of the functionality of the invention may even be carried out by remote processors communicating with processor 29 through the network 53.

Above, the invention has been explained with reference to an e-mail being stored by an e-mail server 12 that needs to be transmitted to a mobile device 17(i) using the HTTP protocol over a GPRS network 15 between gateway 18 and the mobile device 17(i). However, it is to be understood that this is an embodiment only.

Although the protocol translator 14 is shown to be a separate unit outside the e-mail server 12, the protocol translator 14 may, instead, be part of the functionality of the e-mail server 12. Alternatively, the protocol translator 14 may be part of the gateway 18.

It is observed that the embodiments given above are only examples and that the scope of protection of the present invention is defined by the annexed claims only.

## Claims

1. Method of transferring a message stored in a computer arrangement (12) to a mobile device (17(i)), comprising:
• transmitting an alert message from said computer arrangement (12) to said mobile device (17(i)) via a first network (19);
• transmitting said message stored in said computer arrangement (12) to said mobile device (17(i)) upon request from said mobile device (17(i)) via a second network (15) ;
wherein both said first and second networks being mobile networks (15, 19).

2. Method according to claim 1 comprising the step establishing an on-line connection between said computer arrangement (12) and said mobile device (17(i));

3. Method according to claim 1 or 2, wherein said first network (19) is arranged to utilise a first protocol and wherein said second network (15) is arranged to utilise a second protocol.

4. Method according to claim 3, comprising sending said message from said computer arrangement (12) to a protocol translator (14) using a third protocol, translating said message in said third protocol to a message in said second protocol before transmission to said mobile device (17(i)).

5. Method according to any of the preceding claims, wherein said computer arrangement is an e-mail server (12).

6. Method according to claim 5, wherein said message is an e-mail message.

7. Method according to any of the preceding claims, wherein said second protocol is HTTP.

8. Method according to any of the preceding claims, wherein said second wireless network (15) is either GPRS or UMTS.

9. Method according to any of the preceding claims, wherein said first wireless network is GSM.

10. Method according to any of the preceding claims, comprising establishing an on-line connection between said computer arrangement (12) and said mobile device (17(i)) either automatically by said mobile device (17(i)) or by said mobile device (17(i)) after being instructed to do so by a user of the mobile device (17(i)).

11. Communication system comprising a computer arrangement storing a message in a memory and arranged to transmit said message to a switched-on mobile device (17(i)), said computer arrangement being arranged to:
• transmitting an alert message from said computer arrangement (12) to said mobile device (17(i)) via a first network (19);
• transmitting said message from said computer arrangement (12) to said mobile device (17(i)) upon request from said mobile device (17(i)) via a second network (15) ;
wherein said first and second networks are mobile networks (15, 19).

12. Communication system according to claim 11 arranged to establish an on-line connection between said computer arrangement (12) and said mobile device (17(i));

13. Communication system according to claim 11 or 12, wherein said first network (19) is arranged to utilise a first protocol and wherein said second network (15) is arranged to utilise a second protocol.

14. Communication system according to claim 13, comprising a protocol translator (14), wherein said computer arrangement (12) is arranged to send said message to said protocol translator (14) using a third protocol and said protocol translator is arranged to translate said message in said third protocol to a message in said second protocol before transmission to said mobile device (17(i)).

15. Communication system according to claim 14, wherein said protocol translator (14) is included in the computer arrangement (12).

16. Communication system according to any of the claims 12-15, wherein said computer arrangement is an e-mail server (12).

17. Communication system according to claim 16, wherein said message is an e-mail stored at the e-mail server (12).

18. Communication system according to any of the claims 12 through 17, wherein the system comprises a gateway (18) between the computer arrangement (12) and the first and second mobile networks (15, 19).

19. Communication system according to claim 18, wherein, in operation, the computer arrangement (12), upon receiving said message, establishes a PAP message and transmits this PAP message via a PAP protocol to said gateway (18), and the gateway (18), upon receiving said PAP message, generates an SMS message for said mobile device (17(i)) including said alert message.

20. Communication system according to any of the claims 12 through 19, wherein the system comprises at least one mobile device (17(i)).

21. Communication system according to claim 20, wherein said mobile device (17(i)) is arranged to generate an HTTP get message upon receiving said alert message, either automatically or after having received an instruction to that effect from a user of the mobile device (17(i)).

22. Communication system according to claim 21, wherein said protocol translator (14) is arranged to translate said message to a HTTP reply message.

23. Mobile device arranged to receive an alert message through a first mobile network (15), to automatically generate a HTTP get message, to transmit the HTTP get message to a computer arrangement (12) storing a message for the mobile device (17(i)) and to receive the message from said computer arrangement (12) as a HTTP reply message.
